(19) Europäisches Patentamt
European Patent Office
Office européen des brevets

(11) **EP 3 542 887 A1**

(12) **EUROPEAN PATENT APPLICATION**

(43) Date of publication:
**25.09.2019  Bulletin 2019/39**

(51) Int Cl.:
**B01D 53/22** *(2006.01)*    **B01D 53/94** *(2006.01)*
**F01N 3/00** *(2006.01)*

(21) Application number: **19386007.9**

(22) Date of filing: **07.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.02.2018   GR 20180100044**

(71) Applicant: **MONOLITHOS Catalysts & Recycling Ltd**
**11476 Athens (GR)**

(72) Inventor: **The designation of the inventor has not yet been filed**

(54) **DEVICE AND PROCESS FOR THE TREATMENT OF ENGINE FLUE GASES WITH HIGH OXYGEN EXCESS**

(57)     High oxygen concentration in the flue gas of lean burn engines is a major issue but also a challenge for the efficient treatment of gaseous pollutants. The present patent application discloses a method for removing oxygen from the exhaust gases of a lean burn engine by shifting gas mixture composition in order to make further processing of the flue gas possible in catalytic converters widely used in petrol engines emission control. The method relies on carbonate ion conductive electrochemical membranes that utilize the large $CO_2$ concentration gradient between the flue gases and the atmosphere. This results in a gradient in the electrochemical potential of the carbonate ions, in diffusion of the latter from the flue gases to the atmosphere and thus, in the removal of $O_2$ from the gas stream of the flue gases.

A device to remove $O_2$ from the flue gas stream using the above method is also described in the present patent application. Moreover, the suggested process to use the device for removing oxygen is described. The process includes installation of the oxygen removal device in the flue gas stream of lean burn engines at a proper temperature in flow contact with the particle filter and the catalytic converter for efficient treatment of toxic gaseous pollutants, like CO, NO and hydrocarbons.

Figure 4

EP 3 542 887 A1

**Description**

A method, device and process is described herein for the removal of the oxygen in the flue gas of lean burn engines to create concentration conditions near stoichiometry, where conventional three-way catalysts are efficient for the reduction of nitrogen oxides ($NO_x$).

The selective catalytic reduction of nitric oxide (NO) emissions in lean burn engine (like Diesel engine) exhausts, where high oxygen ($O_2$) excess is present, shows a great technological challenge since noble metal catalysts, similar to those used for gasoline engine emissions processing, exhibit good activity for the selective reduction of NO, but they are severely poisoned by strongly adsorbed oxygen under oxygen excess conditions. Although many research studies have been made in order to synthesize catalysts tolerable to high oxygen excess, no practical applications have been introduced to the market of lean burn engines emissions treatment. As a result, big amounts of $NO_x$ are emitted to the atmosphere by lean burn engines putting at risk their future.

Recently, a urea-based system has been introduced in diesel engine vehicular emission treatment, where ammonia is used as reducing agent. Although $NO_x$ is effectively reduced to nitrogen, toxic ammonia trace-emissions with significant environmental impact have been detected, shifting and not solving the problem.

Moreover, the option of fuel injection upstream the catalytic converter in order to modify and adjust the air/fuel ratio to desired levels has already been proposed, but without great market acceptance due to the significant increase in fuel consumption.

Technologies similar to the one described herein have been mentioned in the literature regarding the separation and capture of carbon dioxide ($CO_2$) from gas streams [1-5]; however, they fail to describe the utilization for oxygen ($O_2$) removal and the application to lean-burn engine exhaust gas, where excess oxygen ($O_2$) conditions exist.

Carbon dioxide separation membranes and reactors are described in US2012/0014852A1 *"Membranes and reactors for $CO_2$ separation"* patent application [1], utilizing a system comprising a two phases conducting membrane; a molten carbonate phase impregnated into the pores of a solid oxide substrate. A hydrogen ($H_2$) and $CO_2$ first inlet gas stream and a methane ($CH_4$) second inlet gas stream are included separated by the membrane. $CO_2$ is removed from the first inlet gas stream as it comes in contact with the membrane, resulting in a $H_2$ outlet gas stream, while the formed carbonate ion diffuses toward the second inlet gas stream where it reforms $CH_4$ to CO and $H_2$.

A composite ionic-electronic conduction membrane for $CO_2$ separation and capture is described in US2011/0168572 "Composite mixed carbonate ion and electron conducting membranes and reactant gas assisted chemical reactors for $CO_2$ separation and capture" [2]. A porous metal membrane comprising Ni, Ag, or combinations thereof, having molten carbonate within the pores, is used to remove the $CO_2$ contained in an inlet flue gas stream through the membrane. $CO_2$ is removed by the inlet flue gas stream as it comes in contact with the membrane, resulting in a $CO_2$-free outlet gas stream and a second $CO_2$-containing gas stream.

A $CO_2$ permeable membrane is described in US7,909,911 B2 "Carbon dioxide permeable membrane" [3]. The membrane comprises a porous oxygen-ion conductive solid oxide, having molten carbonate in its pores.

A $CO_2$ separation membrane is described in US2008/0115667 "Conductive membrane for carbon dioxide separation" [4], where the authors disclose a conductive membrane able to selectively separate carbon dioxide from a gas mixture containing carbon dioxide, a manufacturing method thereof, and a method of separating carbon dioxide using the membrane. The conductive membrane for carbon dioxide separation includes molten carbonate, acting as carbonate-ion conductor, and oxide, acting as electronic conductor, and exhibits infinite selectivity for carbon dioxide at temperatures of 500°C, or more.

A pressure driven method for the separation of $CO_2$ utilizing a solid electrolyte membrane is described in US5,733,435 "Pressure driven solid electrolyte membrane gas separation method" [5]. The inventor discloses a process for removing oxygen from a feed stream to obtain an oxygen-depleted product stream utilizing oxygen-ion solid electrolytes, where ion diffusion direction is determined by the oxygen concentration gradient across the membrane. In addition, an electrolytic operation by current or voltage application is described for oxygen-ion diffusion against its concentration gradient.

The selective catalytic reduction of NO emissions in lean burn engine (like Diesel engine) exhausts, under high $O_2$ excess, shows a great technological challenge since noble metal catalysts, similar to those used for gasoline engine emissions processing, exhibit good activity for the selective reduction of NO, but they are severely poisoned by strongly adsorbed oxygen under oxygen excess conditions. Although many research studies have been made to synthesize catalysts tolerable to high oxygen excess, no practical applications have been introduced to the market of lean burn engine emission treatment. As a result, big amounts of $NO_x$ are emitted to the atmosphere by lean burn engines putting at risk their future.

Recently, a urea-based system has been introduced in diesel engine vehicular emission treatment, where ammonia is used as reducing agent. Although $NO_x$ is effectively reduced to nitrogen, toxic ammonia trace-emissions with significant environmental impact have been detected, shifting and not solving the problem. Moreover, the option of fuel injection upstream the catalytic converter in order to modify and adjust the air/fuel ratio to desired levels has already been reported, but without any great market acceptance due to significant increase in fuel consumption.

## Introduction

The utilization of dense composite electrochemical membranes that exhibit mixed ionic-electronic conductivity is described herein for the removal of the $O_2$ in the exhaust gas of lean burn engines. This will allow for efficient and selective catalytic reduction of $NO_x$ over conventional catalytic converters, similar to those used in spark ignition engine exhaust treatment.

## The electrochemical composite membrane

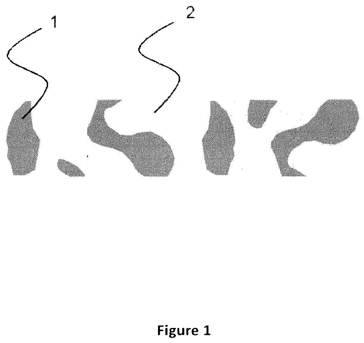

The composite electrochemical membrane consists of the electrolyte, a molten carbonate salt (called herein Phase I) for the conduction of carbonate ionic species $\left(CO_3^{2-}\right)$, impregnated into a refractory porous solid matrix (called herein Phase II) that serves both as mechanical support and electron conductor for internal electron transfer. Electron transfer across the membrane is required for the electrochemical reactions to occur at the two sides of the membrane. Figure 1 depicts a cross-sectional view of the composite electrochemical membrane, showing Phase I **1** and Phase II **2** materials.

Phase I **1** consists of an alkali metal carbonate selected from the list: $Li_2CO_3$, $Na_2CO_3$, $K_2CO_3$, $Rb_2CO_3$, and $Cs_2CO_3$, and mixtures thereof, at various concentrations including the binary, ternary, quaternary or quinary eutectic mixtures with melting point below 600°C. An example is the ternary eutectic mixture of $Li_2CO_3$, $Na_2CO_3$ and $K_2CO_3$ at a 4.35/3.15/2.5 molar ratio with melting point at ~397°C.

In addition, alkaline earth metal carbonates from the list: $CaCO_3$, $MgCO_3$, $SrCO_3$ and $BaCO_3$ can be used as additives at a weight ratio 0.01-10% to increase oxygen solubility in the melt and to improve the rheological properties of the molten carbonate salt mixtures at high temperatures.

Phase I **1** ionic conductivity can range between $10^{-3}$ and $10^4$ S/cm in the operating temperature range between the melting point of the selected Phase I material and 800°C.

Phase II **2** consists of refractory porous solid materials, with 30-70% porosity, and pore size from $0.1\mu m$ to 1mm that exhibit electronic conductivity in the range $10^{-5}$ -$10^7$ S/cm and also, low (<$10^{-3}$ S/cm) oxygen-ion conductivity in the temperature range 300-800°C in air.

Phase **II 2** consists of materials selected from the list below and exhibit the above mentioned properties:

1. Perovskites of the form $ABXO_3$, with a substituted cation, e.g., $(La_{0.80}Sr_{0.20})_{0.95}MnO_{3-x}$ or $La_{0.95}(Ni_{0.60}Co_{0.40})O_3$ or $La(Ni_{0.60}Fe_{0.40})O_3$.
2. Metals, e.g., Al, Ti, Ni, Cu, Zn, Sn, Fe, Si or other similar
3. Metal alloys, e.g., steel, bronze or other similar
4. Carbon-based nanomaterials, e.g., carbon nanotubes, carbon fibers, graphene, fullerene or other similar
5. Combinations of the above mentioned materials.

The porosity of Phase II **2** material can vary between 30 and 70%, balancing between mechanical support and $CO_3^{2-}$ ionic conductivity. Phase II **2** porosity selection is based on pressure difference across the membrane, the targeted ionic conductivity of Phase I **1**, ($10^{-3}$ - $10^4$ S/cm), and the operation temperature range. Phase I **1** impregnation into the pores of Phase II **2** can be done by capillary diffusion of Phase I **1** melt, at temperatures above Phase I **1** melting point.

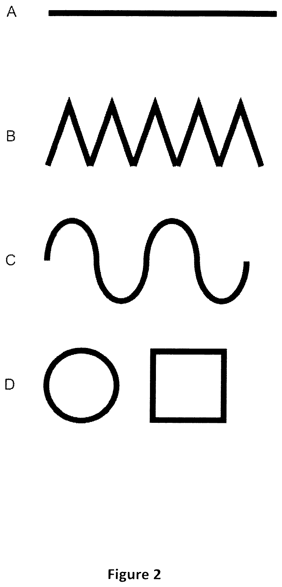

The composite electrochemical membrane, comprising parts 1 and 2, can be manufactured at various shapes or geometries, as shown in Figure 2. It can be either flat (A), or toothed (B), or corrugated (C), or tubular (D) with circular or square cross section profile, or combinations thereof depending on application. The thickness of the composite membrane can be in the range between 0.5mm and 10mm. When operating in variable temperature zones, variable thickness membranes can be used with 5-30% lower thickness at low temperature zones.

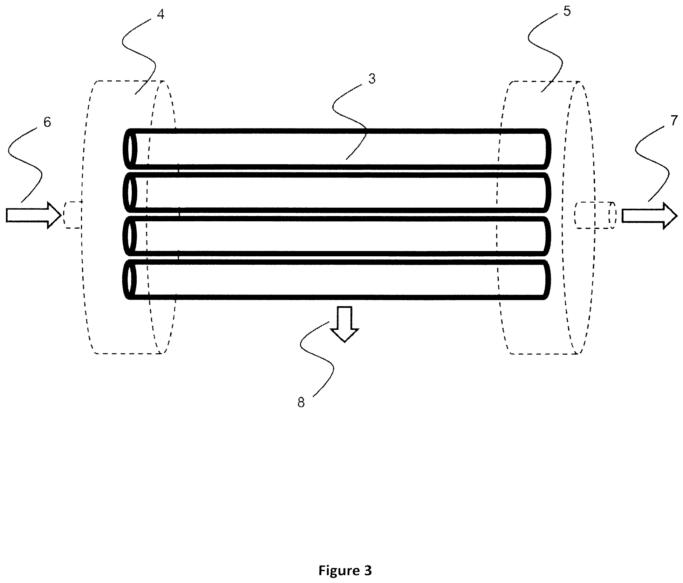

In addition, compact stacks of the described herein membranes can be used to limit energy losses. An example of a stack unit utilizing tubular membranes is shown in Figure 3, where the lumen side of all tubular membranes **3** is in gas contact with the gas inlet stream **6**, through the gas distribution unit **4**, and with the gas outlet stream **7** through the gas collection unit **5**. The produced gas steam of $CO_2$ and $O_2$ is released to the atmosphere.

In another embodiment a metallic or ceramic or other refractory container is used to encage the above described membrane stack and minimize heat losses.

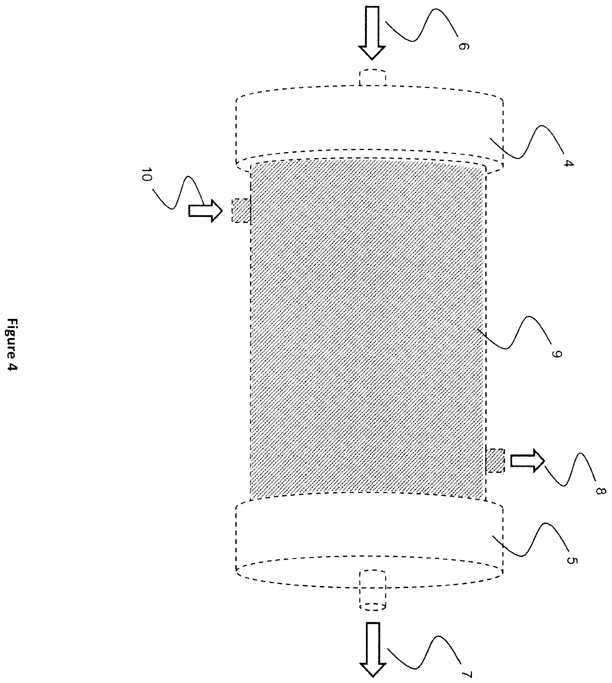

In another embodiment, as shown in Figure 4, the stack of membranes for the removal of $O_2$ can be hermetically enclosed in a metal container **9**, exhibiting a gas inlet **10** and gas outlet **8**, allowing for management of the produced

$CO_2$ and $O_2$ gas mixture that will be purged through the gas outlet **8** of the gas-tight metal container **9**.

In another embodiment, a carrier gas is fed through the gas inlet **10** to adjust gas flow rate and composition at desired levels.

In another embodiment, the exhaust gas is fed to the membrane from the gas inlet **10** and exits the membrane from the gas outlet **8**, while the produced gas stream containing $O_2$ and $CO_2$ exits the membrane system from the gas outlet stream **7** with or without carrier gas in the gas inlet stream **6**.

The carrier gas can be either air or exhaust gas, while it can be in the temperature range between ambient temperature and 800°C, or preferably at the membrane operation temperature.

In another embodiment, catalyst particles deposited on one or both sides of Phase II **2** of the composite membrane are used that accelerate surface reaction kinetics between $CO_2$ and $O_2$ toward the formation of carbonate ions. Catalysts can be consisted of finely dispersed metals, metal alloys, metal oxides, metal carbonates, metal nitrates or combinations thereof, in the size range from 1nm to 100$\mu$m. Metals can be selected between Cu, Pt, Pd, Rh, Ti, Ru, Ir, Fe, Zn, Sn, Au, Ca, La, Mg, Mn, Co, Cr, V, Gd, Ga, Ge, Ce, Zr, Ag, Mo, Nb, Al, In, Sb, Ba, Sr, Cs, Ru, Na, K, Li, Y, W and mixtures thereof, their oxides, their carbonates and their nitrates.

**Device for oxygen removal from the exhaust gas of a lean-burn engine**

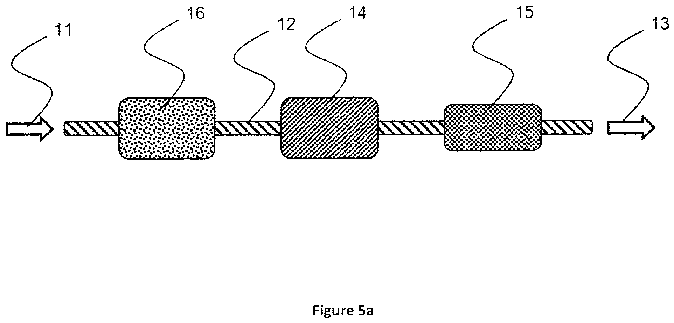

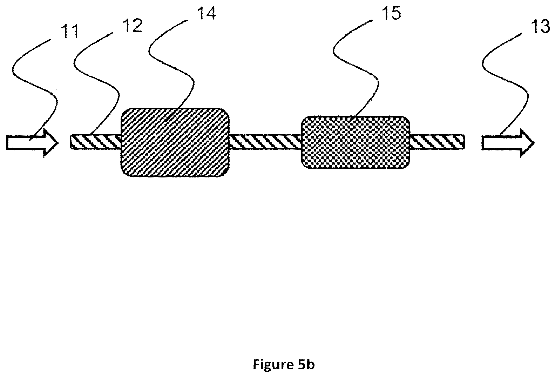

The described herein system can be used as oxygen removal device **14** when installed inline a high temperature stream, with hourly gas space velocities (HGSV) in the range $10^3$ - $2 \cdot 10^5$ $h^{-1}$, or part of the exhaust stream (1-99%), as shown in Figures 5a and 5b.

The installation of the oxygen removal device **14** can be carried out on the metallic exhaust gas tube **12** of the engine having an inlet stream **11** coming from the engine exhaust manifold and an outlet stream **13**, downstream the carbon particle filter **16** and upstream the catalytic three-way converter **15**.

In absence of the carbon particle filter **16**, the installation of the oxygen removal device **14** can be carried out on the metallic exhaust gas tube **12** of the engine having an inlet stream **11** coming from the engine exhaust manifold and an outlet stream **13**, upstream the catalytic three-way converter **15**.

The temperature of the flue gases at the inlet of the oxygen removal device **14** can be in the range from the melting point of Phase I to 800°C.

The gas mixture at the inlet of the oxygen removal device **14** may consist of $O_2$, $CO_2$, NO, CO, $H_2O$, a mixture of hydrocarbons (C1-C13) and $N_2$. The concentration of $O_2$ may vary in the range 3-18%, $CO_2$ in the range 5-20%, NO in the range 0.02-0.2%, CO in the range 0.2-2%, $H_2O$ in the range 5-15%, hydrocarbons in the range 0.1-0.8% C1 equivalent and $N_2$ for balance.

The produced gas mixture of $O_2$ and $CO_2$ **8** can be utilized on board the vehicle. In another embodiment, the produced gas mixture of $O_2$ and $CO_2$ **8** can be utilized at the engine inlet manifold and improve its performance due to high $O_2$ content.

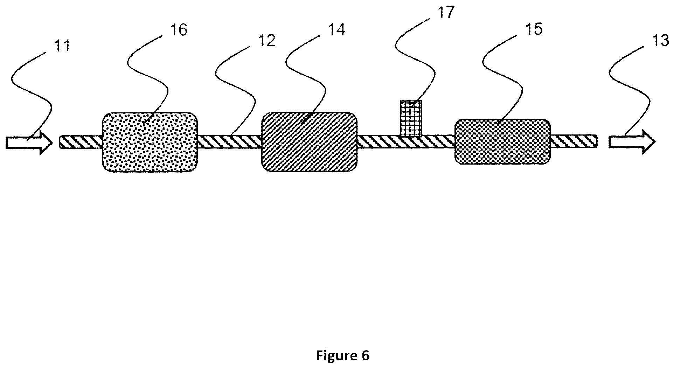

In another embodiment, as shown in Figure 6, the proposed oxygen removal device **14** can be combined with a dynamic fuel injection system **17** located downstream the oxygen removal device **14**. The dynamic fuel injection system **17** can detect the current oxygen concentration in the exhaust gas mixture and inject the required amount of fuel to further reduce the air/fuel ratio to levels closer to stoichiometry.

**Process for oxygen removal from flue gases**

$O_2$ and $CO_2$ in the exhaust gas stream are combined to form carbonate anions at one side of the electrochemical membrane. The carbonate anions diffuse across the electrochemical membrane and reach its outer side where they dissociate to $CO_2$ and $O_2$. The described outwards diffusion is driven by the chemical potential gradient of both $CO_2$ and $O_2$.

Based on research mechanistic studies [7] on carbonate ion formation and conduction, its most likely that $O_2$ reduction to $O^{2-}$ occurs via the formation of $CO_4^{2-}$ intermediate species, at the Phase I (PI)/Gas Phase (GP) interface (reaction 1), which then decomposes at the Phase I (PI)/Phase II (PII) interface to form $CO_3^{2-}$ and $O^{2-}$ species (reaction 2). The latter react with $CO_2$ from the gas phase to form $CO_3^{2-}$ (reaction 3). The overall reaction (reaction 4), shows that $O_2$ and $CO_2$ permeation is expected to take place at 1.5:1 ratio, emphasizing on the importance of the described herein technology for $O_2$ separation applications rather than $CO_2$ separation.

$$CO_3^{2-}(PI) + \frac{1}{2}O_2(GP) \xrightarrow{PI/GP} CO_4^{2-}(PI) \tag{1}$$

$$CO_4^{2-}(PI) + 2e^- \xleftrightarrow{PI/PII/GP} CO_3^{2-}(PI) + O^{2-}(PI/GP) \tag{2}$$

$$CO_2(GP) + O^{2-} \xleftrightarrow{PI-PII-GP} CO_3^{2-}(PI) \tag{3}$$

$$CO_2(g) + \frac{3}{2}O_2(g) + 2e^- + CO_3^{2-} \leftrightarrow 2CO_4^{2-} \tag{4}$$

Based on the literature [7], the suggested sluggish or rate determining step is reaction 1 and thus, the permeation rate is proportional to $(P_{O_2})^{1/2} \times \ln P_{CO_2}$. Moreover, the criterion for outwards diffusion is described by equation 5. Based on equation 5, the described herein technology utilizes the big difference in the concentration of $CO_2$ across the membrane in order to remove the oxygen. Equation 5 can also describe the case where the membrane outer surface is exposed to ambient air; 21% $O_2$ and 400ppm $CO_2$.

$$\frac{\left(P_{O_2}^{feed}\right)^{1/2} \cdot \ln P_{CO_2}^{feed}}{\left(P_{O_2}^{perm}\right)^{1/2} \cdot \ln P_{CO_2}^{perm}} > 1 \tag{5}$$

**Figure Captions**

    **Figure 1:** Schematic representation of the porous electrochemical membrane

    **Figure 2:** Possible geometries of the electrochemical membrane in stack design

    **Figure 3:** Cylindrical geometry membrane stack

    **Figure 4:** Membrane stack, canned to manage of the produced $O_2$ and $CO_2$ gas mixture.

    **Figure 5a:** A possible process for diesel engine emission control by utilizing a nanoparticles filter **16**, an oxygen removal device **14**, and a three-way catalytic converter **15**.

    **Figure 5b:** A possible process for diesel engine emission control by utilizing an oxygen removal device **14**, and three-way catalytic converter **15**.

    **Figure 6:** A possible process for diesel engine emission control by utilizing a nanoparticles filter **16**, an oxygen removal device **14**, a dynamic fuel injection system **17**, and three-way catalytic converter **15**.

**Literature**

    1. K. Huang, *Membranes and reactors for $CO_2$ separation,* US2012/0014852A1 (2012).
    2. K. Huang, *Composite mixed-carbonate ion and electron conducting membranes and reactant gas assisted chemical reactors for $CO_2$ separation and capture,* US2011/0168572A1 (2011).
    3. K. Lackner, A. West, J. Wade, *Carbon dioxide permeable membrane,* US7909911B2 (2011).
    4. S. Lee, S. Woo, J.Yu, D. Seo, K. Hong, I. Han, S. Kim, *Conductive membrane for carbon dioxide separation,* US2008/0115667A1 (2008).

5. R. Prasad, C. Gottzmann, *Pressure driven solid electrolyte membrane gas separation method,* US5733435 (1998)

6. S. Frangini, S. Loreti, The role of alkaline-earth additives on the molten carbonate corrosion of 316L stainless steel, Corros Sci 49 (2007) 3969-3987.

7. L. Zhang, J. Tong, Y. Gong, M. Han, S. Wang, Fast electrochemical CO2 transport through a dense metal-carbonate membrane: A new mechanistic insight, J Membr Sci 468 (2014) 373-379.

**Claims**

1. A method for the removal of the oxygen in the flue gas of lean burn internal combustion engines of vehicles, machineries or power generators, using a composite and dense electrochemical membrane, which is in flow contact with the flue gas stream comprising 3% to 18% $O_2$ and 2% to 15% $CO_2$, and part of them is removed when the flue gas comes in contact with the electrochemical membrane and a new gas stream 8 is formed across the membrane comprising $O_2$ and $CO_2$ at molar ratio between 0.5/1 and 2/1.

2. A method for the removal of the oxygen in the flue gas of lean burn internal combustion engines of vehicles, machineries or power generators, using a composite and dense electrochemical membrane as claimed in claim 1, wherein the electrochemical membrane consists of a first phase **1** comprising a single or a mixture of two or more alkali carbonates selected from the list $Li_2CO_3$, $Na_2CO_3$, $K_2CO_3$, $Rb_2CO_3$ and $Cs_2CO_3$, at ratios that allow melting points of the first phase **1** below 600°C, including eutectic mixtures, and a single or a mixture of two or more alkaline earth carbonates selected from the list $CaCO_3$, $MgCO_3$ $SrCO_3$ and $BaCO_3$ at a weight ratio between 0 and 10%, where the first phase **1** is located into the pores of a second phase **2**, comprising either a perovskite of the form $ABXO_3$ with a substituted cation, like $(La_{0.80}Sr_{0.20})_{0.95}MnO_{3-x}$ or $La_{0.95}(Ni_{0.60}Co_{0.40})O_3$ or $La(Ni_{0.6}Fe_{0.4})O_3$, or a metal selected from the list Al, Ti, Ni, Cu, Zn, Sn, Fe and Si or an alloy mixture thereof, or a carbon based nanomaterial, or combinations thereof, and
both sides surface of the second phase 2 are decorated by particles of metal selected from the list Cu, Pt, Pd, Rh, Ti, Ru, Ir, Fe, Zn, Sn, Au, Ca, La, Mg, Mn, Co, Cr, V, Gd, Ga, Ge, Ce, Zr, Ag, Mo, Nb, Al, In, Sb, Ba, Sr, Cs, Ru, Na, K, Li, Y and W, or alloy mixtures thereof, or their oxide compounds, or their carbide compounds, or their nitrate compounds, or combinations thereof, at a weight ratio between 0 and 2% and mean particle diameter from 1nm to 100$\mu$m, and
the thickness of the membrane varies between 0.5mm and 10mm, exhibiting flat, or toothed, or corrugated, or tubular with circular or triangular or square or other polygonal cross-section profile, and
the second phase **2** is solid and refractory at temperatures up to 1000°C and exhibits 30-70% porosity, $10^{-3}$-$10^7$ S/cm electronic conductivity and oxygen ionic conductivity below $10^{-3}$ S/cm.

3. A device for the removal of the oxygen in the flue gas of lean burn internal combustion engines of vehicles, machineries or power generators, consisted of a stack of electrochemical membranes **3** that are in flow contact with the flue gas stream **6**, and the inlet flue gas stream **6**, comprising 3% to 18% $O_2$ and 2% to 15% $CO_2$, is distributed through an inlet flow distributor **4**, and
an outlet flue gas stream **7** wherein $O_2$ concentration is equal to stoichiometry with $\pm$15% deviation, suitable to be fed in a three-way catalytic converter for the abatement of toxic $NO_x$, $C_xH_y$ and CO, and
a produced gas stream **8** across the membrane comprising $O_2$ and $CO_2$ at molar ratio between 0.5/1 and 2/1.

4. A device for the removal of the oxygen in the flue gas of lean burn internal combustion engines of vehicles, machineries or power generators as claimed in claim 3, wherein the stack of electrochemical membranes **3** is canned into a metal or ceramic or other similar refractory container with a gas inlet **10** and outlet **8**, wherein a carrier gas, selected from air, flue gas or mixture thereof, is fed to the inlet **10**, and the outlet **8** is in flow contact with the air intake system or the engine inlet manifold.

5. A process for the removal of the oxygen in the flue gas of lean burn internal combustion engines of vehicles, machineries or power generators, wherein an oxygen removal device **14** is in flow contact with flue gas inlet stream **11** from which $O_2$ and $CO_2$ are removed when they come in contact with the oxygen removal device **14** toward the formation of a gas stream **8** comprising $O_2$ and $CO_2$ at molar ratio between 0.5/1 and 2/1, and
it is in flow contact downstream with a three-way catalytic converter **15** for the reduction of nitrogen oxides, the oxidation of carbon monoxide and the oxidation of hydrocarbons in the flue gas inside the exhaust pipe **12** of the engine, and with an outlet flue gas stream **13**.

6. A process for the removal of the oxygen in the flue gas of lean burn internal combustion engines of vehicles, machineries or power generators, as claimed in claim 5, wherein a carbon particulate filter **16**, which is installed on the exhaust pipe **12**, is in flow contact downstream with the flue gas stream **11** and the oxygen removal device **14**, and it is possible that an oxidation catalyst is integrated with the carbon particulate filter **16**.

7. A process for the removal of the oxygen in the flue gas of lean burn internal combustion engines of vehicles, machineries or power generators, as claimed in claim 5 or 6, wherein an injection system **17** of fuel or other organic reducing mixture is installed downstream the oxygen removal device **14** and upstream the three-way catalytic converter **15**.

8. A process for the removal of the oxygen in the flue gas of lean burn internal combustion engines of vehicles, machineries or power generators, wherein the flue gas stream **11** is in flow contact with the oxygen removal system **14**, which is in flow contact with and installed upstream the three-way catalytic converter **15**.

9. A process for the removal of the oxygen in the flue gas of lean burn internal combustion engines of vehicles, machineries or power generators, as claimed in claim 8, wherein fuel or other organic reducing mixture is added in the flue gas stream downstream the oxygen removal device **14** and upstream the three-way catalytic converter **15**.

**Figure 1**

A

B

C

D

**Figure 2**

Figure 3

**Figure 4**

**Figure 5a**

**Figure 5b**

**Figure 6**

Europäisches
Patentamt
European
Patent Office
Office européen
des brevets

# EUROPEAN SEARCH REPORT

**Application Number**

EP 19 38 6007

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/179778 A1 (DURRETT RUSSELL P [US]) 28 July 2011 (2011-07-28) | 8,9 | INV. B01D53/22 |
| Y | * paragraphs [0018], [0030], [0032] * * claims 8, 10 * * figures 1, 4 * | 1-7 | B01D53/94 F01N3/00 |
| Y | US 2008/115667 A1 (LEE SHIWOO [KR] ET AL) 22 May 2008 (2008-05-22) | 1-7 | |
| A | * paragraphs [0021] - [0027], [0037] - [0040] * | 8,9 | |

TECHNICAL FIELDS
SEARCHED (IPC)

B01D
F01N

The present search report has been drawn up for all claims

| Place of search | Date of completion of the search | Examiner |
|---|---|---|
| Munich | 26 July 2019 | Pöhlmann, Robert |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 38 6007

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2019

| Patent document cited in search report | Publication date | Patent family member(s) | Publication date |
|---|---|---|---|
| US 2011179778    A1 | 28-07-2011 | CN    102146829  A<br>DE 102011009245 A1<br>US    2011179778 A1 | 10-08-2011<br>01-09-2011<br>28-07-2011 |
| US 2008115667    A1 | 22-05-2008 | KR  20080045784  A<br>US    2008115667 A1 | 26-05-2008<br>22-05-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20120014852 A1
- US 20110168572 A
- US 7909911 B2
- US 20080115667 A
- US 5733435 A
- US 20110168572 A1
- US 20080115667 A1

### Non-patent literature cited in the description

- **S. FRANGINI ; S. LORETI.** The role of alkaline-earth additives on the molten carbonate corrosion of 316L stainless steel. *Corros Sci,* 2007, vol. 49, 3969-3987
- **L. ZHANG ; J. TONG ; Y. GONG ; M. HAN ; S. WANG.** Fast electrochemical CO2 transport through a dense metal-carbonate membrane: A new mechanistic insight. *J Membr Sci,* 2014, vol. 468, 373-379